# EUROPÄISCHE PATENTANMELDUNG

(11) **EP 2 275 983 A1**
(43) Veröffentlichungstag der Anmeldung: **19.01.2011**
(21) Anmeldenummer: 10011922.1
(22) Anmeldetag: 12.10.2006
(51) Int. Cl.: G06Q 20/00, G06F 21/00

(54) **Verfahren zur datentechnisch gesicherten elektronischen Kommunikation sowie eine Vorrichtung zur Ausführung dieses Verfahrens**

(30) Priorität: 21.10.2005 DE 102005050878
(62) Teilanmeldung aus: 06021391.5
(71) Anmelder: Fiducia IT AG, 76227 Karlsruhe (DE)
(72) Erfinder: Mussenbrock, Christoph, 81377 München (DE)
(74) Vertreter: Bartels & Partner

(57) **Zusammenfassung**

Die Erfindung betrifft ein Verfahren zur datentechnisch gesicherten elektronischen Kommunikation zwischen einer ersten Datenverarbeitungseinrichtung (2) eines ersten Teilnehmers und einer zweiten Datenverarbeitungseinrichtung (4) eines zweiten Teilnehmers, dadurch gekennzeichnet, dass in einem nicht-manipulierbaren Speicherbereich (24) einer Vorrichtung (22), die über eine datentechnische Schnittstelle (26) mit der ersten Datenverarbeitungseinrichtung (2) verbunden ist, ein erster Schlüssel (50) der zweiten Datenverarbeitungseinrichtung (4) gespeichert ist, dass die zweite Datenverarbeitungseinrichtung (4) eine Willenserklärung des ersten Teilnehmers zusammen mit einer Bestätigungsanforderung mit einem zweiten Schlüssel der zweiten Datenverarbeitungseinrichtung (4) verschlüsselt und an die Vorrichtung (22) übermittelt, dass die Vorrichtung (22) die Mitteilung mit dem ersten Schlüssel (50) der zweiten Datenverarbeitungseinrichtung (4) entschlüsselt, und dass die Vorrichtung (22) eine Ausgabeeinheit (28) aufweist, mit der die Willenserklärung, deren Bestätigung von der zweiten Datenverarbeitungseinrichtung (4) angefordert wird, dem ersten Teilnehmer signalisiert wird, sowie eine zugehörige Vorrichtung (22).

## Beschreibung

Die Erfindung betrifft ein Verfahren zur datentechnisch gesicherten elektronischen Kommunikation sowie eine Vorrichtung zur Ausführung dieses Verfahrens.

In vielen Anwendungsfällen der Datenverarbeitung besteht das Erfordernis, geschäftliche oder sonstige Transaktionen und zugehörige Willenserklärungen wie beispielsweise Überweisungen, Lastschriften usw. über einen unsicheren Verbindungskanal wie beispielsweise das Internet abzuwickeln. Für diesen Zweck wurde ein Verschlüsselungsverfahren unter Verwendung eines so genannten öffentlichen Schlüssels (public key) und eines zugehörigen privaten Schlüssels (private keys) entwickelt, von denen der öffentliche Schlüssel aus dem Verfügungsbereich des erzeugenden Teilnehmers gegeben wird und praktisch öffentlich ist, während der private Schlüssel im Verfügungsbereich des erzeugenden Teilnehmers verbleibt und für Nichtberechtigte unzugänglich aufbewahrt wird.

Bei diesem Verschlüsselungsverfahren handelt es sich um eine sichere Möglichkeit, Informationen zwischen zwei Teilnehmern über ein unsicheres Transportmedium auszutauschen. Ausreichende Schlüssellängen vorausgesetzt gelten diese Verfahren nach derzeitigem Kenntnisstand als nicht angreifbar. Diese Verfahren setzen allerdings voraus, dass die Sendeund Empfangseinheiten sowie der Vorgang der Ver- und Entschlüsselung und die Eingabe und Anzeige der unverschlüsselten Information nicht korrumpiert sind. Sobald eine dieser Einheiten korrumpiert ist, ist eine absolute Sicherheit nicht mehr gewährleistet.

Der vorliegenden Erfindung liegt daher die Aufgabe zugrunde, ein Verfahren zur datentechnisch gesicherten elektronischen Kommunikation und eine zugehörige Vorrichtung bereitzustellen, welche die Nachteile des bekannten Verfahrens und der zugehörigen Vorrichtungen überwinden. Insbesondere soll gewährleistet werden, dass die an einer Ausgabeeinheit der Datenverarbeitungseinrichtung des die Willenserklärung abgebenden Teilnehmers signalisierte Information authentisch ist. In einer Ausführungsart soll gewährleistet sein, dass die Willenserklärung unverändert an die Datenverarbeitungseinrichtung des anderen Teilnehmers übertragen wird.

Das Problem ist durch das im Anspruch 1 bestimmte Verfahren sowie durch die im nebengeordneten Anspruch bestimmte Vorrichtung gelöst. Besondere Ausführungsarten der Erfindung sind in den Unteransprüchen bestimmt.

Erfindungsgemäß ist das Verfahren zur datentechnisch gesicherten elektronischen Kommunikation zwischen einer ersten Datenverarbeitungseinrichtung eines ersten Teilnehmers und einer zweiten Datenverarbeitungseinrichtung eines zweiten Teilnehmers, insbesondere zwischen einer ersten Datenverarbeitungseinrichtung eines Kunden eines Bankinstitutes und einer zweiten Datenverarbeitungseinrichtung eines Rechenzentrums des Bankinstitutes, wobei die erste Datenverarbeitungseinrichtung Eingabemittel aufweist, mit denen der erste Teilnehmer eine Willenserklärung formuliert, die an die zweite Datenverarbeitungseinrichtung übermittelt wird, und wobei die zweite Datenverarbeitungseinrichtung eine Bestätigung der Willenserklärung anfordert, und erst nach Eingang der Bestätigung die der Willenserklärung entsprechende Transaktion ausgeführt wird, dadurch gelöst, dass in einem nicht-manipulierbaren Speicherbereich einer Vorrichtung, die über eine datentechnische Schnittstelle mit der ersten Datenverarbeitungseinrichtung verbunden ist, ein erster Schlüssel der zweiten Datenverarbeitungseinrichtung gespeichert ist, dass die zweite Datenverarbeitungseinrichtung die Willenserklärung zusammen mit einer Bestätigungsanforderung mit einem zweiten Schlüssel der zweiten Datenverarbeitungseinrichtung verschlüsselt und an die Vorrichtung übermittelt, dass der zweite Schlüssel der zweiten Datenverarbeitungseinrichtung derart gewählt ist, dass dann, wenn die mit dem zweiten Schlüssel verschlüsselte Mitteilung mit dem ersten Schlüssel entschlüsselt werden kann, die verschlüsselte Mitteilung von der Vorrichtung als authentisch erachtet wird, dass die Vorrichtung die Mitteilung mit dem ersten Schlüssel der zweiten Datenverarbeitungseinrichtung entschlüsselt, und dass die Vorrichtung eine Ausgabeeinheit aufweist, mit der die Willenserklärung, deren Bestätigung von der zweiten Datenverarbeitungseinrichtung angefordert wird, dem ersten Teilnehmer signalisiert wird.

In einer Ausführungsart wird eine bidirektionale Kommunikation zwischen den beiden Teilnehmern vorausgesetzt. Bei der ersten Datenverarbeitungseinrichtung des ersten Teilnehmers kann es sich um einen handelsüblichen Personal Computer (PC) handeln, der über Eingabeund Ausgabeeinheiten verfügt, beispielsweise eine Tastatur, eine Maus und einen Monitor. Die erste Datenverarbeitungseinrichtung wird als potenziell "unsicher" oder korrumpiert angesehen, d. h. die an der Ausgabeeinheit der ersten Datenverarbeitungseinrichtung signalisierten Nachrichten oder Daten stimmen nicht mit absoluter Sicherheit mit den Daten oder Nachrichten überein, welche die erste Datenverarbeitungseinrichtung über den Kommunikationskanal von der zweiten Datenverarbeitungseinrichtung empfangen hat. Umgekehrt kann auch nicht mit Sicherheit davon ausgegangen werden, dass Nachrichten oder Daten, die über die Eingabeeinheit der ersten Datenverarbeitungseinrichtung eingegeben werden, unverändert und authentisch auf den Kommunikationskanal gegeben werden.

Die zweite Datenverarbeitungseinrichtung wird dagegen als "sicher" betrachtet, d. h. Nachrichten, welche die zweite Datenverarbeitungseinrichtung über den Kommunikationskanal empfängt, werden unverändert über die Ausgabeeinheiten der zweiten Datenverarbeitungseinrichtung ausgegeben und sind authentisch. Umgekehrt werden Nachrichten, die über die Eingabeeinheiten der zweiten Datenverarbeitungseinrichtung eingegeben werden oder in der zweiten Datenverarbeitungseinrichtung errechnet werden, inhaltlich authentisch auf den Kommunikationskanal gegeben.

Weiterhin ist auch der Kommunikationskanal als "unsicher" zu betrachten. Beispielsweise besteht für Dritte die Möglichkeit, die Daten auf dem Kommunikationskanal zu manipulieren. Das zugehörige Szenario wird häufig unter dem Begriff "man in the middle"-Attacke beschrieben.

In einer Ausführungsart verfügt die Vorrichtung über Rechenmittel zum Durchführen der Berechnungen zum Ver- und Entschlüsseln der Mitteilungen oder Daten und greift diesbezüglich insbesondere nicht auf Rechenmittel der ersten Datenverarbeitungseinrichtung zurück. Außerdem weist die Vorrichtung einen nicht-manipulierbaren Speicherbereich auf, in dem ein erster Schlüssel der zweiten Datenverarbeitungseinrichtung gespeichert ist, insbesondere ein öffentlicher Schlüssel des Rechenzentrums des Bankinstitutes. Besonders vorteilhaft ist, wenn die Vorrichtung von dem Rechenzentrum oder dem Bankinstitut an den ersten Teilnehmer ausgehändigt wird. Auf diese Weise ist sichergestellt, dass der in der Vorrichtung gespeicherte erste Schlüssel der zweiten Datenverarbeitungseinrichtung authentisch ist. Die Sicherheit vor Manipulationen des Speicherinhalts kann beispielsweise dadurch gewährleistet sein, dass der Schlüssel in einem Read Only Memory (ROM) gespeichert ist oder bei der Herstellung des Speicherbausteins unveränderlich realisiert ist.

Nachdem der erste Teilnehmer seine Willenserklärung, beispielsweise einen Überweisungsauftrag an sein Bankinstitut, mittels der Eingabemittel der ersten Datenverarbeitungseinrichtung formuliert hat, indem er im Internet die Website seines Bankinstitutes aufgerufen hat und die formulierte Willenserklärung abgesendet hat, erhält er von der zweiten Datenverarbeitungseinrichtung die Willenserklärung zusammen mit einer Bestätigungsaufforderung zurückübermittelt, wobei diese Mitteilung mit einem zweiten, privaten Schlüssel der zweiten Datenverarbeitungseinrichtung verschlüsselt ist.

Entsprechend der Technologie der asymmetrischen Schlüssel kann diese Mitteilung mit dem in der ersten Vorrichtung gespeicherten ersten Schlüssel der zweiten Datenverarbeitungseinrichtung nur dann entschlüsselt werden, wenn für die Verschlüsselung auch tatsächlich der zweite Schlüssel verwendet wurde. Da die zweite Datenverarbeitungseinrichtung als sicher zu betrachten ist, beispielsweise weil es sich dabei um ein professionell gemanagtes Rechenzentrum des Bankinstitutes handelt, ist davon auszugehen, dass die von der Vorrichtung empfangene Mitteilung als authentisch zu erachten ist, d. h. als von der zweiten Datenverarbeitungseinrichtung empfangene und nicht manipulierte Nachricht, wenn diese Mitteilung mit dem in der Vorrichtung gespeicherten ersten Schlüssel entschlüsselt werden kann.

Die entschlüsselte Mitteilung wird nun unmittelbar von der Vorrichtung signalisiert mittels einer Ausgabeeinheit. Die Ausgabe kann durch eine optische Anzeige erfolgen, insbesondere durch ein Display, und/oder auch durch akustische Signalgeber, beispielsweise durch Sprachausgabe. Die Vorrichtung ist derart aufgebaut ist, dass sichergestellt ist, dass die von der Ausgabeeinheit signalisierte Willenserklärung übereinstimmt mit der von der zweiten Datenverarbeitungseinrichtung übermittelten Willenserklärung. Mithin ist die von der Vorrichtung signalisierte Willenserklärung authentisch, ohne dass für Dritte die Möglichkeit besteht, die Signalisierung zu manipulieren. Die erste Datenverarbeitungseinrichtung ist weder an der Entschlüsselung noch an der Signalisierung der Willenserklärung beteiligt, sodass eine potenziell bestehende Korrumpierung oder Manipulation der ersten Datenverarbeitungseinrichtung, beispielsweise durch einen Computervirus, die Sicherheit des erfindungsgemäßen Verfahrens nicht beeinträchtigen kann.

Die Schnittstelle der Vorrichtung zur ersten Datenverarbeitungseinrichtung kann eine im Computerbereich bereits standardisierte Schnittstelle sein, beispielsweise eine USB-Schnittstelle (Universal Serial Bus).

Die Vorrichtung kann einen Mikrocontroller aufweisen, um die erforderlichen Berechnungen beim Ver- und Entschlüsseln durchzuführen. Der Mikrocontroller steuert zum einen die Ausgabeeinheit und die Schnittstelle, für die auch ein separater Controller vorhanden sein kann. Die Vorrichtung kann weiterhin ein wechselbares Speichermodul aufweisen, beispielsweise auch eine SIM-Karte (Subscriber Identification Module) oder eine ähnliche Karte, die ihrerseits mit einem sicheren Betriebssystem ausgestattet ist, beispielsweise mit dem Secure Chip Card Operating System (SECCOS) der Firma Giesecke & Devrient, siehe http://www.gi-de.com.

In einer Ausführungsart weist die Vorrichtung außerdem eine Eingabeeinheit auf, mit welcher der erste Teilnehmer die von der zweiten Datenverarbeitungseinrichtung angeforderte Bestätigung oder einen Widerruf eingeben kann. Im einfachsten Fall kann es sich dabei um eine oder mehrere Tasten handeln, deren Betätigung als Bestätigung oder Widerruf interpretiert wird. Grundsätzlich sind alle geeigneten Möglichkeiten der Eingabe denkbar, einschließlich eines berührungsempfindlichen Displays, einer Spracherkennung oder dergleichen.

In einer Ausführungsart erzeugt die Vorrichtung ihr eigenes Schlüsselpaar selbst, d. h. die Vorrichtung generiert einen ersten (öffentlichen) Schlüssel und einen zugehörigen zweiten (privaten) Schlüssel und speichert diese vorzugsweise in einem nicht-manipulierten Speicherbereich der Vorrichtung. Diese Schlüssel können alternativ oder ergänzend auch durch ein auswechselbares Speichermodul der Vorrichtung bereitgestellt werden, beispielsweise durch eine SIM-Karte. In einer Ausführungsart ist in der Vorrichtung auch die Kommunikationsadresse, an welche die Vorrichtung Mitteilungen über den Kommunikationskanal versendet, fest und vorzugsweise unveränderlich eingestellt. Beispielsweise kann die Netzwerk-oder Internet-Adresse der zweiten Datenverarbeitungseinrichtung fest und unveränderlich eingestellt sein.

In einer Ausführungsart übermittelt die Vorrichtung an die zweite Datenverarbeitungseinrichtung zusammen mit der Bestätigung oder dem Widerruf der Willenserklärung weitere, nämlich die Mitteilung individualisierende Daten. Dabei kann es sich beispielsweise um eine Zufallszahl handeln. Diese Hinzufügung individualisierender Daten soll eine Manipulation verhindern, insbesondere eine Manipulation auf dem Datenkanal, welche durch Aufzeichnung und Wiederabspielen (REPLAY) der von der Vorrichtung gesendeten Mitteilung erfolgen kann. Die zweite Datenverarbeitungseinrichtung prüft die empfangenen Mitteilungen daraufhin, ob sie sich in ausreichender Weise von der oder den zuvor empfangenen Mitteilungen unterscheidet. Alternativ oder ergänzend zu einer Zufallszahl kann auch eine Transaktionsnummer hinzugefügt werden, insbesondere wenn die zugehörigen Transaktionsnummern in der Vorrichtung bereits vorhanden sind, d. h. gespeichert sind.

In einer Ausführungsart verschlüsselt die zweite Datenverarbeitungseinrichtung die Willenserklärung zusammen mit der Bestätigungsanforderung auch noch mit dem ersten (öffentlichen) Schlüssel der Vorrichtung und stellt damit sicher, dass die so verschlüsselte Mitteilung nur von der Vorrichtung mit dem nur dort verfügbaren zweiten (privaten) Schlüssel entschlüsselt und damit gelesen werden kann. Dadurch ist die Manipulationssicherheit noch weiter erhöht.

In einer Ausführungsart werden vor der Bestätigung der Willenserklärung, gegebenenfalls auch noch vor der Formulierung der Willenserklärung mittels der ersten Datenverarbeitungseinrichtung, zwischen der Vorrichtung und der zweiten Datenverarbeitungseinrichtung die ersten (öffentlichen) Schlüssel ausgetauscht. Hierzu sendet die Vorrichtung ihren ersten Schlüssel in mit dem ersten Schlüssel der zweiten Datenverarbeitungseinrichtung verschlüsselter Form an die zweite Datenverarbeitungseinrichtung. Nur die zweite Datenverarbeitungseinrichtung ist in der Lage, diese Mitteilung mit ihrem zweiten (privaten) Schlüssel zu entschlüsseln, und speichert den ersten Schlüssel der Vorrichtung ab. In einer Ausführungsart der Erfindung sind der zweiten Datenverarbeitungseinrichtung alle ersten Schlüssel aller Vorrichtungen bekannt, d. h. alle ersten Schlüssel der Vorrichtungen, die an die Kunden des Bankinstitutes ausgeliefert wurden. Es besteht in diesem Fall die Möglichkeit, dass der empfangene erste Schlüssel mit dem gespeicherten ersten Schlüssel verglichen wird und auf Plausibilität geprüft wird.

In einer Ausführungsart wird vor der Bestätigung der Willenserklärung von der zweiten Datenverarbeitungseinrichtung deren erster (öffentlicher) Schlüssel mit dem zweiten (privaten) Schlüssel verschlüsselt und an die Vorrichtung übermittelt. Die Vorrichtung kann ihrerseits mit dem dort gespeicherten, nicht-manipulierbaren ersten Schlüssel der zweiten Datenverarbeitungseinrichtung die eingegangene Mitteilung entschlüsseln und insbesondere den so erhaltenen ersten Schlüssel mit dem gespeicherten ersten Schlüssel vergleichen und auf Plausibilität prüfen. Dadurch kann die Vorrichtung auch prüfen und gegebenenfalls feststellen, dass sie mit der zweiten Datenverarbeitungseinrichtung eine sichere Verbindung aufgebaut hat.

Weitere Vorteile, Merkmale und Einzelheiten der Erfindung ergeben sich aus den Unteransprüchen sowie der nachfolgenden Beschreibung, in der unter Bezugnahme auf die Zeichnungen ein Ausführungsbeispiel im Einzelnen beschrieben ist. Dabei können die in den Ansprüchen und in der Beschreibung erwähnten Merkmale jeweils einzeln für sich oder in beliebiger Kombination erfindungswesentlich sein.
- Fig. 1: zeigt ein Blockschaltbild eines Systems zur datentechnisch gesicherten elektronischen Kommunikation,
- Fig. 2: zeigt die Vorrichtung in vergrößerter Darstellung.

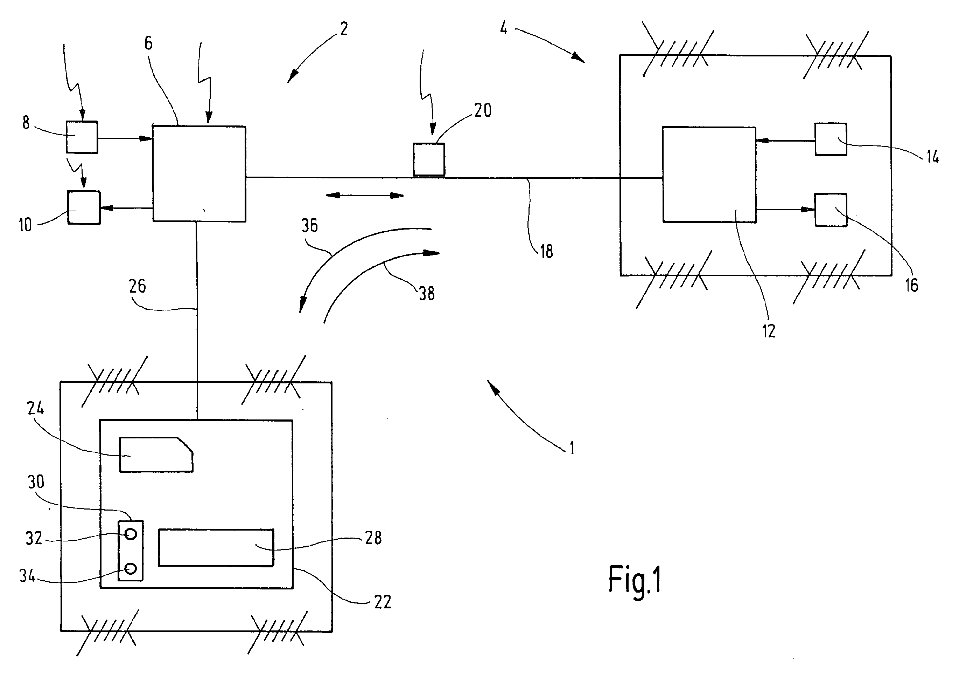

Die Fig. 1 zeigt ein Blockschaltbild eines Systems 1 zur datentechnisch gesicherten elektronischen Kommunikation zwischen einer ersten Datenverarbeitungseinrichtung 2 eines ersten Teilnehmers und einer zweiten Datenverarbeitungseinrichtung 4 eines zweiten Teilnehmers.

Bei der ersten Datenverarbeitungseinrichtung 2 handelt es sich um einen handelsüblichen Personal Computer (PC) 6 eines Kunden eines Bankinstitutes. Der PC 6 umfasst Eingabemittel 8, beispielsweise eine Tastatur und/oder eine Computermaus. Weiterhin umfasst der PC 6 Ausgabemittel 10, beispielsweise einen Monitor. Der erste Teilnehmer formuliert an der ersten Datenverarbeitungseinrichtung 2 eine Willenserklärung, beispielsweise einen Überweisungsauftrag an sein Bankinstitut, bei dem er ein entsprechendes Bankkonto führt.

Die zweite Datenverarbeitungseinrichtung 4 ist das Rechenzentrum des Bankinstitutes. Sie umfasst ebenfalls eine Rechnereinheit 12, insbesondere eine oder mehrere Recheneinheiten und Datenspeicher. Die Recheneinheit 12 bearbeitet unter anderem die Willenserklärungen des ersten Teilnehmers und verbucht die zugehörigen Transaktionen wie beispielsweise eine Überweisung. Die zweite Datenverarbeitungseinrichtung 4 weist Eingabemittel 14 und Ausgabemittel 16 auf, mittels denen Bedienstete des Rechenzentrums Daten und Mitteilungen eingeben bzw. entgegennehmen können. Der Kommunikationskanal 18 verbindet die erste Datenverarbeitungseinrichtung 2 mit der zweiten Datenverarbeitungseinrichtung 4.

Im Rahmen des Ausführungsbeispieles wird davon ausgegangen, dass die zweite Datenverarbeitungseinrichtung 4 durch geeignete Maßnahmen als sicher zu betrachten ist, d. h. dass die von der Recheneinheit 12 auf den Kommunikationskanal 18 gegebenen Daten authentisch sind, d. h. unverfälscht sind. Demgegenüber wird im Rahmen des Ausführungsbeispiels die erste Datenverarbeitungseinrichtung 2 des Kunden als potenziell unsicher betrachtet, d. h. es kann nicht mit Sicherheit davon ausgegangen werden, dass die beispielsweise an dem Eingabemittel 8 von dem ersten Teilnehmer eingegebenen Daten oder Mitteilungen inhaltlich unmanipuliert auf den Kommunikationskanal 18 gegeben werden. Manipulationsmöglichkeiten bestehen dabei nicht nur innerhalb des Personal Computers 6, beispielsweise durch Manipulationsprogramme wie Trojaner oder Viren, sondern auch an dem Eingabemittel 8 und/oder dem Ausgabemittel 10, insbesondere dann, wenn es sich dabei um intelligente Einheiten handelt, die ihrerseits programmgesteuert sind. Eine weitere Manipulationsmöglichkeit besteht auf dem Kommunikationskanal 18, beispielsweise durch Zwischenschalten eines "man in the middle" 20, der den auf dem Kommunikationskanal 18 übertragenen Datenstrom unterbrechen oder manipulieren kann, oder auch manipulierte Daten in den Kommunikationskanal 18 einleiten kann.

Demgegenüber wird die erfindungsgemäße Vorrichtung 22 im Rahmen des Ausführungsbeispiels als sicher betrachtet. Die Vorrichtung 22 weist einen nicht-manipulierten Speicherbereich 24 auf, in dem ein erster (öffentlicher) Schlüssel der zweiten Datenverarbeitungseinrichtung 4 gespeichert ist.

Die Vorrichtung 22 weist eine Schnittstelle 26 zu der ersten Datenverarbeitungseinrichtung 2 auf, beispielsweise eine USB-Schnittstelle. Die Vorrichtung 22 weist eine Ausgabeeinheit 28 auf, beispielsweise ein ein- oder mehrzeiliges Display zum Anzeigen alphanumerischer und/oder graphischer Daten. Die Vorrichtung 22 weist eine Eingabeeinheit 30 auf, die im Ausführungsbeispiels aus zwei Drucktasten 32, 34 gebildet ist, wobei mit der ersten Drucktaste 32 der erste Teilnehmer eine Bestätigung der von der Ausgabeeinheit 28 signalisierten Willenserklärung abgeben kann, oder mit der zweiten Drucktaste 34 einen Widerruf.

Die von der Ausgabeeinheit 28 signalisierte Willenserklärung ist dabei authentisch zu der von der zweiten Datenverarbeitungseinrichtung 4 zusammen mit einer Bestätigungsanforderung an die Vorrichtung 22 gesendeten Mitteilung 36, weil die Vorrichtung 22 derart aufgebaut ist, dass eine Manipulation der von der Ausgabeeinheit 28 dem ersten Teilnehmer signalisierten Willenserklärung ausgeschlossen ist. Dies ist dadurch gewährleistet, dass die Mitteilung 36 mit einem zweiten (privaten) Schlüssel der zweiten Datenverarbeitungseinrichtung 4 verschlüsselt ist. Dabei wird im Rahmen des Ausführungsbeispiels davon ausgegangen, dass dieser zweite Schlüssel nur der zweiten Datenverarbeitungseinrichtung 4 bekannt ist, insbesondere unbefugte Dritte nicht in der Lage sind, Nachrichten mit diesem zweiten Schlüssel zu verschlüsseln. Zum Entschlüsseln benutzt die Vorrichtung 22 ausschließlich den im nicht-manipulierbaren Speicherbereich 24 unveränderlich gespeicherten ersten (öffentlichen) Schlüssel der zweiten Datenverarbeitungseinrichtung 4.

Nur wenn die über den Kommunikationakanal 18 und die erste Datenverarbeitungseirnichtung 2 an die Vorrichtung 22 übermittelte Mitteilung 36 mit diesem ersten Schlüssel entschlüsselt werden kann, wird der entschlüsselte Inhalt der Mitteilung 36 von der Ausgabeeinheit 28 signalisiert. Der erste und der zweite Schlüssel der zweiten Datenverarbeitungseinrichtung 4 sind dabei so gewählt, dass eine mit dem zweiten Schlüssel verschlüsselte Mitteilung nur mit dem ersten Schlüssel entschlüsselt werden kann. Eine erfolgreiche Entschlüsselung mit dem ersten Schlüssel bietet damit die Gewähr, dass die Nachricht authentisch von der zweiten Datenverarbeitungseinrichtung 4 stammt.

Die Mitteilung 36 kann darüber hinaus von der zweiten Datenverarbeitungseinrichtung 4 auch noch mit einem ersten (öffentlichen) Schlüssel der Vorrichtung 22 verschlüsselt sein. Dieser erste Schlüssel der Vorrichtung 22 kann der zweiten Datenverarbeitungseinrichtung 4 entweder bekannt sein, beispielsweise weil die Vorrichtung 22 mit den zugehörigen Schlüsseln von dem die zweite Datenverarbeitungseinrichtung 4 betreibenden Rechenzentrum des Bankinstituts herausgegeben wird, oder weil der erste Schlüssel der Vorrichtung 22, vorzugsweise verschlüsselt mit dem ersten Schlüssel der zweiten Datenverarbeitungseinrichtung 4, zuvor von der Vorrichtung 22 an die zweite Datenverarbeitungseinrichtung 4 übermittelt worden ist. Durch diese zusätzliche Verschlüsselung mit dem ersten Schlüssel der Vorrichtung 22 ist gewährleistet, dass die Mitteilung 36 nur mit dem zugehörigen zweiten (privaten) Schlüssel der Vorrichtung 22 entschlüsselt werden kann. Auch diesbezüglich wird für das Ausführungsbeispiel angenommen, dass der zweite Schlüssel der Vorrichtung 22 nur der Vorrichtung 22 bekannt ist.

Die Bestätigung oder ein Widerruf wird von der Vorrichtung 22 an die zweite Datenverarbeitungseinrichtung 4 im Rahmen einer weiteren Mitteilung 38 übermittelt, und die zu der Willenserklärung zugehörige Transaktion, beispielsweise eine Überweisung, wird von der zweiten Datenverarbeitungseinrichtung 4 nur dann ausgeführt, wenn die weitere Mitteilung 38 von der zweiten Datenverarbeitungseinrichtung 4 als Bestätigung interpretiert werden kann. Die weitere Mitteilung 38 wird über die erste Datenverarbeitungseinrichtung 2 und den Kommunikationskanal 18 übermittelt.

Der Umstand, dass die Kommunikation zwischen der Vorrichtung 22 und der zweiten Datenverarbeitungseinrichtung 4 über die Schnittstelle 26, die potenziell unsichere erste Datenverarbeitungseinrichtung 2 und den potenziell unsicheren Kommunikationskanal 18 erfolgt, kann die Sicherheit der Kommunikation zwischen Vorrichtung 22 und zweiter Datenverarbeitungseinrichtung 4 nicht beeinflussen. Vielmehr ist sichergestellt, dass sowohl die Vorrichtung 22 eine Manipulation in der Mitteilung 36 erkennt, als auch dass die zweite Datenverarbeitungseinrichtung 4 eine Manipulation in der weiteren Mitteilung 38 erkennt. Gegebenenfalls erfolgt daraufhin ein Abbruch des Bearbeitungsvorganges, insbesondere wird die zu der Willenserklärung zugehörige Transaktion nicht ausgeführt.

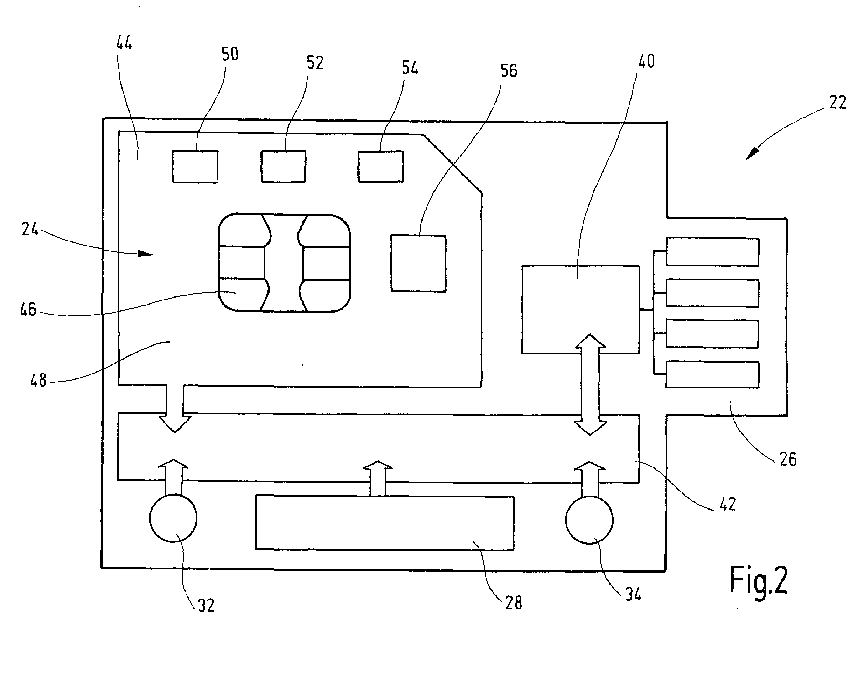

Die Fig. 2 zeigt die Vorrichtung 22 in vergrößerter Darstellung. Über die Schnittstelle 26 erfolgt auch die Energieversorgung für den Betrieb der Vorrichtung 22. Die Schnittstelle 26 wird von einem Schnittstellen-Controller 40 gesteuert, beispielsweise einem USB-Controller. Dieser kommuniziert mit einem Mikrocontroller 42, bei dem es sich um einen Controller mit einer entsprechend sicheren Architektur handelt, wie er beispielsweise unter der Typenbezeichnung AT90SC von der Firma ATMEL angeboten wird, siehe http://www.atmel.com/products/secureAVR. An dem Mikrocontroller 42 ist die Ausgabeeinheit 28 angeschlossen, mittels der dem ersten Teilnehmer die von ihm zu bestätigende oder zu widerrufende Willenserklärung angezeigt werden kann, beispielsweise "Überweisung des Betrages X an den Empfänger Y". Außerdem ist an den Mikrocontroller 42 die erste Taste 32 als Bestätigungstaste angeschlossen und die zweite Taste 34 als Widerrufstaste. Die erste Taste 32 und zweite Taste 34 können dabei farblich, haptisch oder anderweitig erkennbar unterschiedlich ausgebildet sein, beispielsweise kann die erste Taste 32 (Bestätigung) einen grünen Tastenkopf aufweisen oder mit einer grün leuchtenden Leuchtdiode markiert sein. und die zweite Taste 34 (Widerruf) eine entsprechende Markierung in roter Farbe aufweisen. Alternativ oder ergänzend zu der optischen Anzeige mittels der Ausgabeeinheit 28 kann die zu bestätigende oder zu widerrufende Willenserklärung von der Vorrichtung 22 auch in anderer Weise signalisiert werden, beispielsweise durch eine entsprechende Sprachausgabe mittels eines Lautsprechers.

Der Mikrocontroller 42 hat weiterhin Zugriff auf einen nicht-manipulierbaren Speicherbereich 24. Dieser ist im Ausführungsbeispiel von einer SIM-Karte 44 gebildet, wie sie beispielsweise auch aus der Mobilfunktelefonie bekannt ist. Die SIM-Karte 44 kann insbesondere austauschbar vorgesehen sein und die Vorrichtung 22 kann hierzu einen entsprechenden Einsteckschacht aufweisen, wobei die elektrische Kontaktierung über ein entsprechendes Kontaktfeld 46 der SIM-Karte 44 bereitgestellt wird. Auf der SIM-Karte 44 befindet sich ein SIM-Controller 48, der mit dem Mikrocontroller 42 Daten austauschen kann. Weiterhin weist die SIM-Karte 44 einen Speicherbereich auf, in dem insbesondere der erste Schlüssel 50 der zweiten Datenverarbeitungseinrichtung 4 unveränderlich gespeichert ist. Der erste Schlüssel 50 kann dabei beim Herstellen der SIM-Karte 44 durch einen entsprechenden Herstellungsschritt, beispielsweise eine entsprechende Metallisierungsmaske, physikalisch unveränderlich festgelegt sein. Es ist aber auch möglich, durch eine entsprechende datentechnische Architektur den ersten Schlüssel 50 manipulationssicher zu machen, beispielsweise unter Verwendung eines entsprechenden Betriebssystems für den SIM-Controller 48, etwa das "Secure Chip Card Operating System" (SECCOS), wie es von der Firma Giesecke & Devrient angeboten wird, siehe

### http://www.gi-de.com.

In sicherer Weise ist in der Vorrichtung 22, im Ausführungsbeispiel auf der SIM-Karte 44, auch ein Schlüsselpaar bestehend aus erstem (öffentlichem) und zweitem (privatem) Schlüssel 52, 54 der Vorrichtung 22 gespeichert. Diese beiden Schlüssel 52, 54 können auch von der Vorrichtung 22, insbesondere der SIM-Karte 44, selbsttätig erzeugt und sicher abgespeichert werden. Die auf der Vorrichtung 22 vorhandenen Rechenmittel, insbesondere der Mikrocontroller 42, sind in der Lage, Nachrichten unter Verwendung der zugänglichen Schlüssel 50, 52, 54 zu entschlüsseln oder zu verschlüsseln. Entweder die Vorrichtung 22 selbst oder der nichtmanipulierbare Speicherbereich 24 werden von dem Betreiber der zweiten Datenverarbeitungseinrichtung 4 an den ersten Teilnehmer ausgehändigt.

Weiterhin ist auf der SIM-Karte 44 die Netzwerkadresse 56 der zweiten Datenverarbeitungseinrichtung 4 gespeichert, vorzugsweise ebenfalls in einem nicht-manipulierbaren Speicherbereich 24. Bei dem Kommunikationskanal 18 kann es sich insbesondere um eine Datenverbindung handeln, die auch das Internet einschließt. Dementsprechend kann als Netzwerkadresse 56 die Internetadresse der zweiten Datenverarbeitungseinrichtung 4 gespeichert sein. Diese Netzwerkadresse 56 wird von der Vorrichtung 22 beim Versenden der weiteren Mitteilung 38 mit der Bestätigung oder dem Widerruf der Willenserklärung verwendet. Die Netzwerkadresse 56 kann ebenfalls bereits beim Aushändigen der Vorrichtung 22 an den ersten Teilnehmer abgespeichert sein. Grundsätzlich ist es auch möglich, die Netzwerkadresse 56 zu einem späteren Zeitpunkt einzugeben, beispielsweise auch unter Verwendung der Eingabeeinheit 30 der Vorrichtung 22 oder über eine Datenverbindung in die Vorrichtung 22 einzulesen und dort abzuspeichern. Die gesamte Vorrichtung 22 kann beispielsweise in einem Schreibgerät wie etwa einem Kugelschreiber angeordnet sein, wobei die Schnittstelle 26 vorzugsweise an dem der Schreibspitze entgegengesetzten Ende des Schreibgeräts angeordnet ist und mit einer Kappe abdeckbar sein kann.

Nachfolgend wird beispielhaft der Ablauf eines Geschäftsprozesses mit dem erfindungsgemäßen Verfahren beschrieben. Dabei handelt es sich beispielhaft um die Erteilung eines Überweisungsauftrags durch den ersten Teilnehmer, bei dem es sich um den Kunden eines Bankinstitutes handelt, welches unmittelbar oder über ein beauftragtes Rechenzentrum das Bankkonto des Kunden rechentechnisch verwaltet.

Zunächst wird die Vorrichtung 22 mit Ihrer Schnittstelle 26 mit der ersten Datenverarbeitungseinrichtung 2 des Kunden verbunden. Die Vorrichtung 22 signalisiert dem Kunden die Verbindung, beispielsweise durch Anzeige "Ready" an der Ausgabeeinheit 28. Der Kunde initialisiert einen Verbindungsaufbau zwischen der Vorrichtung 22 und der zweiten Datenverarbeitungseinrichtung 4 durch Drücken der ersten Taste 32. Daraufhin wird eine erste so genannte "Session" aufgebaut, wobei innerhalb der zweiten Datenverarbeitungseinrichtung 4 zwischen einer ersten Session mit der Vorrichtung 22 und einer zweiten Session zu der ersten Datenverarbeitungseinrichtung 4 unterschieden wird und es sich insbesondere um zwei getrennt voneinander ablaufende Verfahrensabläufe handelt, die aber miteinander kommunizieren können und insbesondere Daten austauschen können.

Zum Aufbau der ersten Session verschlüsselt die Vorrichtung 22 den ersten (öffentlichen) Schlüssel 52 der Vorrichtung 22 mit dem ersten (öffentlichen) Schlüssel 50 der zweiten Datenverarbeitungseinrichtung 4 und sendet eine derart verschlüsselte Mitteilung über die Schnittstelle 26 und den Kommunikationskanal 18 an die zweite Datenverarbeitungseinrichtung 4. Dort wird die eingehende Mitteilung mit dem zweiten (privaten) Schlüssel der zweiten Datenverarbeitungseinrichtung 4 entschlüsselt und der so erhaltene erste (öffentliche) Schlüssel 52 der Vorrichtung 22 wird gespeichert.

Sofern in der zweiten Datenverarbeitungseinrichtung 4 der erste (öffentliche) Schlüssel 52 der Vorrichtung 22 bereits bekannt war, beispielsweise weil in der zweiten Datenverarbeitungseinrichtung 4 alle ersten (öffentlichen) Schlüssel aller Kunden bzw. aller Vorrichtungen 22 bekannt sind, kann ein Vergleich des von der zweiten Datenverarbeitungseinrichtung 4 empfangenen ersten Schlüssels 52 mit dem gespeicherten ersten Schlüssel erfolgen. Stimmen diese nicht in ausreichender Weise überein, kann die zweite Datenverarbeitungseinrichtung die Verbindung abbrechen und/oder eine Fehlermeldung signalisieren.

Die zweite Datenverarbeitungseinrichtung 4 verschlüsselt daraufhin ihren ersten (öffentlichen) Schlüssel 50 mit ihrem zweiten (privaten) Schlüssel und sendet eine derart verschlüsselte Mitteilung zurück an die Vorrichtung 22. Dort wird die eingegangene Mitteilung mit dem in der Vorrichtung 22 gespeicherten ersten (öffentlichen) Schlüssel der zweiten Datenverarbeitungseinrichtung 4 entschlüsselt. Diese Entschlüsselung ist nur dann erfolgreich möglich und für die Vorrichtung 22 als erfolgreich erkennbar, wenn die Verschlüsselung tatsächlich mit dem zweiten (privaten) Schlüssel der zweiten Datenverarbeitungseinrichtung 4 verschlüsselt wurde. Dies wird gegebenenfalls von der Vorrichtung 22 dem ersten Teilnehmer signalisiert, beispielsweise durch Anzeige von "Connect" an der Ausgabeeinheit 28.

Durch diesen Schlüsselaustausch ist verifiziert, dass in beiden Richtungen eine sichere Datenverbindung besteht. Der erste Teilnehmer kann nun die eigentliche e-banking Session starten, die nachfolgend als zweite Session beschrieben wird. Die zuvor beschriebenen Schritte des Schlüsselaustausches können auch zu einem späteren Zeitpunkt erfolgen oder sind sogar entbehrlich, insbesondere dann, wenn der erste (öffentliche) Schlüssel 52 der Vorrichtung 22 der zweiten Datenverarbeitungseinrichtung 4 auch ohne Schlüsselaustausch bekannt ist.

Der erste Teilnehmer formuliert nun seine Willenserklärung an der ersten Datenverarbeitungseinrichtung 2 und beginnt dabei in der Regel damit, dass er über das Internet die Startseite für das e-banking bei seinem Kreditinstitut aufruft. Hierzu wird auf Seiten der zweiten Datenverarbeitungseinrichtung 4 eine zweite Session initialisiert, und in üblicher Weise fragt die zweite Datenverarbeitungseinrichtung 4 bei der ersten Datenverarbeitungseinrichtung 2 die Zugangsdaten ab, beispielsweise eine PIN (Personal Identification Number). Der erste Teilnehmer macht die entsprechenden Eingaben, die über den Kommunikationskanal 18 übertragen werden und von der zweiten Datenverarbeitungseinrichtung 4 geprüft werden. Bei erfolgreicher Überprüfung der PIN wird dem ersten Teilnehmer der Zugang zum e-banking Bereich gewährt und der erste Teilnehmer wählt die von ihm gewünschte Transaktion aus. Daraufhin sendet die zweite Datenverarbeitungseinrichtung 4 die zugehörige Transaktionsmaske und der erste Teilnehmer füllt diese an der ersten Datenverarbeitungseinrichtung 2 in bekannter Weise aus und sendet eine entsprechende Willenserklärung, welche der gewünschten Transaktion entspricht, zurück an die zweite Datenverarbeitungseinrichtung 4.

Die zweite Datenverarbeitungseinrichtung 4 prüft nun, ob eine erste Session mit der Vorrichtung 22 existiert. Gegebenenfalls wird von der zweiten Session auf die bestehende erste Session mit der Vorrichtung 22 zugegriffen und es werden relevante Transaktionsdaten an die erste Session übergeben. Dieser Vorgang findet innerhalb der zweiten Datenverarbeitungseinrichtung 4 statt. Daraufhin sendet die erste Session der Datenverarbeitungseinrichtung 4 eine Mitteilung über den Kommunikationskanal 18 an die Vorrichtung 22, wobei diese Mitteilung mit dem zweiten (privaten) Schlüssel der zweiten Datenverarbeitungseinrichtung 4 verschlüsselt wird. Zur weiteren Erhöhung der Sicherheit kann diese Mitteilung außerdem noch mit dem ersten (öffentlichen) Schlüssel der Vorrichtung 22 verschlüsselt werden.

Die Vorrichtung 22 empfängt die so verschlüsselte Mitteilung und entschlüsselt diese mit dem ersten (öffentlichen) Schlüssel der zweiten Datenverarbeitungseinrichtung 4, gegebenenfalls auch mit dem zweiten (privaten) Schlüssel 54 der Vorrichtung 22. Wenn diese Entschlüsselung erfolgreich ist, wird die entschlüsselte Mitteilung von der Ausgabeeinheit 28 dem ersten Teilnehmer signalisiert. Der erste Teilnehmer hat nun die Möglichkeit, sein Einverständnis oder seinen Widerruf zu signalisieren.

Im Ausführungsbeispiel kann er sein Einverständnis durch Drücken der ersten Taste 32 signalisieren. Einen Widerruf kann er mit der zweiten Taste 34 signalisieren. Es ist auch möglich, lediglich eine Taste vorzusehen, mit der das Einverständnis innerhalb einer vorgebbaren Zeitdauer signalisiert werden muss, andernfalls interpretiert die Vorrichtung 22 das Verhalten des ersten Teilnehmers als Widerruf.

Die Entscheidung des ersten Teilnehmers wird von der Vorrichtung 22 mit dem ersten (öffentlichen) Schlüssel 50 der zweiten Datenverarbeitungseinrichtung 4 verschlüsselt und zurückgesandt. Dabei kann die Vorrichtung 22 auch noch weitere Daten an die Entscheidung des ersten Teilnehmers anhängen, durch welche die Mitteilung individualisiert wird. Beispielsweise kann eine Zufallszahl angehängt werden oder auch eine Transaktionsnummer, die entweder über die Eingabeeinheit 30 von dem ersten Teilnehmer eingegeben wird oder in der Vorrichtung 22 bereits gespeichert ist. Das Individualisieren des Mitteilungsinhaltes dient insbesondere dazu, dass eine Manipulation der Kommunikation durch Aufzeichnung der von der Vorrichtung 22 übermittelten Entscheidung und anschließendes Wiedergeben ("replay"), beispielsweise durch eine "man in the middle"-Attacke, von der zweiten Datenverarbeitungseinrichtung 4 erkannt werden kann. Zu diesem Zweck vergleicht die zweite Datenverarbeitungseinrichtung 4 die eingehenden Mitteilungen insbesondere darauf, ob sich die Mitteilungen voneinander in ausreichender Weise unterscheiden.

Das Entschlüsseln der eingehenden Mitteilung erfolgt in der zweiten Datenverarbeitungseinrichtung 4 unter Verwendung des zweiten (privaten) Schlüssels der zweiten Datenverarbeitungseinrichtung 4. Ergibt diese Entschlüsselung ein positives Ergebnis, wird die zu der Willenserklärung zugehörige Transaktion von der zweiten Datenverarbeitungseinrichtung 4 ausgeführt. Gleichzeitig wird eine entsprechende Bestätigungsmitteilung an die erste Datenverarbeitungseinrichtung 2 gesendet und dem ersten Teilnehmer durch das Ausgabemittel 10 signalisiert.

Die Vorrichtung 22 kann auch ein Installationsprogramm beinhalten, mittels dem bei einem erstmaligen Anschluss der Vorrichtung 22 an die erste Datenverarbeitungseinrichtung 2 eine automatische Installation der erforderlichen Treiber auf der ersten Datenverarbeitungseinrichtung 2 erfolgt. Die Vorrichtung 22 ist insbesondere in der Lage, initiativ eine Netzwerkverbindung, insbesondere eine Internetverbindung, zu der zweiten Datenverarbeitungseinrichtung 4 aufzubauen, insbesondere über den Weg der Schnittstelle 26 zu der ersten Datenverarbeitungseinrichtung 2 und von dort über den Kommunikationskanal 18. Der vorstehend geschilderte e-banking-Vorgang erfolgt dabei unverändert unter Verwendung der ersten Datenverarbeitungseinrichtung 2, so wie es der erste Teilnehmer bisher schon gewohnt ist.

Die Vorrichtung 22 beinhaltet lediglich eine minimale Konfiguration sowohl an Hardware als auch an Software, um die geforderte Funktionalität, insbesondere das Ver- und Entschlüsseln, die Anzeige der Willenserklärung sowie das Signalisieren des Einverständnisses, zu gewährleisten. Außer dem e-banking-Verfahren sind weitere Anwendungen denkbar, insbesondere Bezahlverfahren für Transaktionen über das Internet. Die Vorrichtung 22 selbst kann ihrerseits ebenfalls vor unerlaubtem Zugriff geschützt sein, beispielsweise indem es erforderlich ist, vor Inbetriebnahme der Vorrichtung 22 eine PIN oder dergleichen einzugeben. Zum Schutz der Vorrichtung 22 vor unberechtigtem Zugriff können auch biometrische Verfahren eingesetzt werden, beispielsweise kann die Vorrichtung 22 einen Fingerprint-Sensor aufweisen.

## Patentansprüche

1. Verfahren zur datentechnisch gesicherten elektronischen Kommunikation zwischen einer ersten Datenverarbeitungseinrichtung (2) eines ersten Teilnehmers, insbesondere eines Kunden eines Bankinstitutes, und einer zweiten Datenverarbeitungseinrichtung (4) eines Rechenzentrums des Bankinstitutes, wobei die erste Datenverarbeitungseinrichtung (2) Eingabemittel (8) aufweist, mit denen der erste Teilnehmer eine Willenserklärung formuliert, die an die zweite Datenverarbeitungseinrichtung (4) übermittelt wird, und wobei die zweite Datenverarbeitungseinrichtung (4) eine Bestätigung (36) der Willenserklärung anfordert, und erst nach Eingang (38) der Bestätigung die der Willenserklärung entsprechende Transaktion ausgeführt wird, **dadurch gekennzeichnet,**
• **dass** in einem nicht-manipulierbaren Speicherbereich (24) einer Vorrichtung (22), die über eine datentechnische Schnittstelle (26) mit der ersten Datenverarbeitungseinrichtung (2) verbunden ist, ein erster Schlüssel (50) der zweiten Datenverarbeitungseinrichtung (4) gespeichert ist,
• **dass** die zweite Datenverarbeitungseinrichtung (4) die Willenserklärung zusammen mit einer Bestätigungsanforderung mit einem zweiten Schlüssel der zweiten Datenverarbeitungseinrichtung (4) verschlüsselt und an die Vorrichtung (22) übermittelt,
• **dass** der zweite Schlüssel der zweiten
Datenverarbeitungseinrichtung (4) derart gewählt ist, dass dann, wenn die mit dem zweiten Schlüssel verschlüsselte Mitteilung mit dem ersten Schlüssel (50) entschlüsselt werden kann, die verschlüsselte Mitteilung von der Vorrichtung (22) als authentisch erachtet wird,
• **dass** die Vorrichtung (22) die Mitteilung mit dem ersten Schlüssel (50) der zweiten Datenverarbeitungseinrichtung (4) entschlüsselt,
• und **dass** die Vorrichtung (22) eine Ausgabeeinheit (28) aufweist, mit der die Willenserklärung, deren Bestätigung von der zweiten Datenverarbeitungseinrichtung (4) angefordert wird, dem ersten Teilnehmer signalisiert wird.

2. Verfahren nach Anspruch 1, **dadurch gekennzeichnet, dass** der erste Teilnehmer die von der zweiten Datenverarbeitungseinrichtung (4) angeforderte Bestätigung an einer Eingabeeinheit (30) der Vorrichtung (22) eingibt.

3. Verfahren nach Anspruch 1 oder 2, **dadurch gekennzeichnet, dass** zusammen mit der Bestätigung weitere, nämlich die Bestätigung individualisierende Daten, insbesondere eine Zufallszahl, eine Transaktionsnummer oder dergleichen, von der Vorrichtung (22) an die zweite Datenverarbeitung (4) übermittelt werden.

4. Verfahren nach einem der Ansprüche 1 bis 3, **dadurch gekennzeichnet, dass** die zweite Datenverarbeitungseinrichtung (4) die Willenserklärung zusammen mit einer Bestätigungsanforderung auch noch mit einem ersten Schlüssel (52) der Vorrichtung (22) verschlüsselt und an die Vorrichtung (22) übermittelt, dass in der Vorrichtung (22) ein zweiter Schlüssel (54) der Vorrichtung (22) gespeichert ist, und dass der erste Schlüssel (52) der Vorrichtung (22) derart gewählt ist, dass dann, wenn die mit dem ersten Schlüssel (52) der Vorrichtung (22) verschlüsselte Mitteilung mit dem zweiten Schlüssel (54) der Vorrichtung (22) entschlüsselt werden kann, die verschlüsselte Mitteilung authentisch ist.

5. Verfahren nach Anspruch 4, **dadurch gekennzeichnet, dass** der erste und/oder zweite Schlüssel (52, 54) der Vorrichtung (22) in dem nicht-manipulierbaren Speicherbereich (24) der Vorrichtung (22) gespeichert ist.

6. Verfahren nach einem der Ansprüche 1 bis 5, **dadurch gekennzeichnet, dass** vor der Bestätigung der Willenserklärung die Vorrichtung (22) einen ersten Schlüssel (52) der Vorrichtung (22) mit dem ersten Schlüssel (50) der zweiten Datenverarbeitungseinrichtung (4) verschlüsselt und an die zweite Datenverarbeitungseinrichtung (4) sendet.

7. Verfahren nach einem der Ansprüche 1 bis 6, **dadurch gekennzeichnet, dass** vor der Bestätigung der Willenserklärung die zweite Datenverarbeitungseinrichtung (4) den ersten Schlüssel (50) der zweiten Datenverarbeitungseinrichtung (4) mit dem zweiten Schlüssel der zweiten Datenverarbeitungseinrichtung (4) verschlüsselt und an die Vorrichtung (22) übermittelt.

8. Verfahren nach einem der Ansprüche 1 bis 7, **dadurch gekennzeichnet, dass** die Mitteilung von der Vorrichtung (22) an die zweite Datenverarbeitungseinrichtung (4) an eine in der Vorrichtung (22) fest eingestellte, insbesondere in dem nicht-manipulierbaren Speicherbereich (24) der Vorrichtung (22) gespeicherte Netzwerkadresse (56) übermittelt wird.

9. Vorrichtung (22) zur datentechnisch gesicherten elektronischen Kommunikation zwischen einer ersten Datenverarbeitungseinrichtung (2) eines ersten Teilnehmers, insbesondere eines Kunden eines Bankinstitutes, und einer zweiten Datenverarbeitungseinrichtung (4) eines Rechenzentrums des Bankinstitutes, wobei die erste Datenverarbeitungseinrichtung (2) Eingabemittel (8) aufweist, mit denen der erste Teilnehmer eine Willenserklärung formuliert, die an die zweite Datenverarbeitungseinrichtung (4) übermittelt wird, und wobei die zweite Datenverarbeitungseinrichtung (4) eine Bestätigung der Willenserklärung anfordert, und erst nach Eingang der Bestätigung die der Willenserklärung entsprechende Transaktion ausgeführt wird, **dadurch gekennzeichnet,**
• **dass** die Vorrichtung (22) über eine datentechnische Schnittstelle (26) mit der ersten Datenverarbeitungseinrichtung (2) verbindbar ist,
• **dass** die Vorrichtung (22) einen nicht-manipulierbaren Speicherbereich (24) aufweist, in dem ein erster Schlüssel (50) der zweiten Datenverarbeitungseinrichtung (4) gespeichert ist,
• **dass** die Vorrichtung (22) Rechenmittel (42) aufweist zum Entschlüsseln der von der zweiten Datenverarbeitungseinrichtung (4) zusammen mit einer Bestätigungsanforderung mit einem zweiten Schlüssel der zweiten Datenverarbeitungseinrichtung (4) verschlüsselte Willenserklärung mit dem ersten Schlüssel (50) der zweiten Datenverarbeitungseinrichtung (4),
• **dass** der zweite Schlüssel der zweiten
Datenverarbeitungseinrichtung (4) derart gewählt ist, dass dann, wenn die mit dem zweiten Schlüssel verschlüsselte Mitteilung mit dem ersten Schlüssel (50) entschlüsselt werden kann, die verschlüsselte Mitteilung authentisch ist,
• und **dass** die Vorrichtung (22) eine Ausgabeeinheit (28) aufweist, mit der die Willenserklärung, deren Bestätigung von der zweiten Datenverarbeitungseinrichtung (4) angefordert wird, dem ersten Teilnehmer signalisierbar ist.

10. Vorrichtung (22) nach Anspruch 9, **dadurch gekennzeichnet, dass** die Vorrichtung (22) eine Eingabeeinheit (30) aufweist zur Eingabe der von der zweiten Datenverarbeitungseinrichtung (4) angeforderten Bestätigung der Willenserklärung.

11. Vorrichtung (22) nach Anspruch 9 oder 10, **dadurch gekennzeichnet, dass** die Vorrichtung (22) einen wechselbaren Datenspeicher (44) aufweist, insbesondere ein Subscriber Identity Module (SIM).
